(19) Europäisches Patentamt / European Patent Office / Office européen des brevets

(11) **EP 2 743 419 A1**

(12) **EUROPEAN PATENT APPLICATION**

(43) Date of publication:
18.06.2014 Bulletin 2014/25

(21) Application number: 12290435.2

(22) Date of filing: 12.12.2012

(51) Int Cl.:
*E04B 1/86* (2006.01)      *E04C 2/04* (2006.01)
*E04C 2/26* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Saint-Gobain Placo SAS
92282 Suresnes (FR)

(72) Inventor: **The designation of the inventor has not yet been filed**

(74) Representative: **Pugsley, Victoria Antonietta**
**Chapman Molony**
**18 Staple Gardens**
**Winchester SO23 8SR (GB)**

(54) **Soundproofing panel**

(57) A panel for use in building construction comprises a substrate board having two opposed faces, a polymer-based lamina being provided on one of the faces of the substrate board. The sound reduction index of a partition wall formed from two of the panels, when measured at a frequency of 5000 Hz, is at least 5 dB greater than that of a partition wall formed from two notional panels having an equivalent mass per unit area to the claimed panel, the notional panels each comprising solely the material of the substrate board.

Fig. 5

EP 2 743 419 A1

Printed by Jouve, 75001 PARIS (FR)

**Description**

Field **of the invention**

The present invention relates to a laminated building panel with improved acoustical soundproofing properties

**Background to the invention**

It is well-known to form acoustic building panels for walls, ceilings, floors and the like by laminating together two or more substrate layers. One such building panel is disclosed in WO2008/124672 and comprises a pair of plasterboard substrate layers, for example of gypsum, which are bonded together with an acrylic glue.

**Summary of the invention**

Surprisingly, it has been found that it is not necessary for soundproofing panels to be formed from boards of the same thickness. In fact, acoustic performance may also be improved by providing a thinner backing lamina on the back of a substrate board.
Furthermore, by selecting a polymer-based backing lamina, the backing lamina may also serve the purpose of reinforcing the substrate board, such that fixtures (such as sinks, televisions, radiators, fire extinguishers, shelves and any other item that requires attachment to the panel) may be attached more securely to the panel.
Therefore, in a first aspect, the present invention may provide a panel for use in building construction, the panel comprising a substrate board having two opposed faces,
wherein a polymer-based lamina is provided on one of the faces of the substrate board, the polymer-based lamina having a thickness of less than 5 mm.
Typically, the thickness of the lamina is less than 4 mm, preferably less than 3 mm, more preferably less than 2.5 mm.
The lamina represents a layer that provides a discrete component of the panel, that is, it is not integrally formed with the substrate. Effectively, there is a well-defined interface or boundary between the substrate and the lamina.
Preferably, the polymer-based lamina comprises principally a thermoplastic polymer. Alternatively, the polymer-based lamina may comprise principally a thermosetting polymer.
The polymer-based lamina may be provided by a monolithic polymer, that is, a unitary, non-composite material. Alternatively, the polymer-based lamina may be provided by a composite material, for example, a fibre-reinforced polymer, such as fibreglass.
Typically, the substrate board comprises plasterboard, that is, a board comprising gypsum plaster extruded between two paper or glass fibre sheets. Alternatively, the substrate board may comprise a polystyrene, phenolic foam, polyurethane foam, or cement board, glasswool batts or fibreboard.
Typically, the polymer-based lamina is glued to the substrate board. However, in other embodiments, the polymer-based lamina may be formed from a resin that is deposited on the board and allowed to cure.
Typically, the lamina has a thickness of at least 0.25 mm, preferably at least 0.5 mm, more preferably at least 1 mm. Such thickness may provide the necessary stiffness to the lamina, such that it can improve the fixing strength of the panel.
Preferably, the thickness of the polymer-based lamina is less than 25% of the thickness of the substrate board, more preferably less than 20%.
A typical panel may comprise a gypsum plasterboard of 10-20 mm thickness, and may have a total thickness of approximately 11-25 mm.
Typically, the lamina is solid and non-porous. This may assist in providing the lamina with the necessary stiffness to improve the fixing strength of the panel. The phrase "solid and non-porous" is intended to exclude laminae that comprise a 3-dimensional porous array. The phrase is not intended to exclude laminae that have apertures, cut-outs, or perforations extending through the thickness of the lamina. For example, it is envisaged that the lamina may include a 2-dimensional distribution of through-thickness apertures.
In general, the polymer-based lamina is selected from the group comprising: polyvinylchloride, HDPE, polypropylene, and fibreglass.
Typically, the density of the polymer-based lamina is in the range 700-1500 kg/m$^3$.
In general, the modulus of elasticity of the polymer-based lamina is at least 500 MPa, preferably at least 750 MPa, more preferably at least 900 MPa.
Typically, the sound reduction index of a partition wall formed from two of the panels, when measured at a frequency of 5000 Hz, is at least 5 dB greater than that of a partition wall formed from two notional panels having an equivalent mass per unit area to the panel of the invention, the notional panels each comprising solely the material of the substrate board.

**Detailed description**

The invention will now be described by way of example with reference to the following Figures in which:

Figure 1 is a graph of sound attenuation vs. frequency for a) measured results for Example 1; and b) calculated results for Example 1

Figure 2 is a graph of sound attenuation vs. frequency for a) measured results for Example 2; and b) calculated results for Example 2

Figure 3 is a graph of sound attenuation vs. frequency for a) measured results for Example 3; and b) calculated results for Example 3

Figure 4 is a graph of sound attenuation vs. frequency for a) measured results for Example 4; and b) calculated results for Example 4

Figure 5 is a graph of sound attenuation vs. frequency for a) measured results for Example 5; and b) calculated results for Example 5

**Examples**

Panels were prepared by gluing a lamina to a gypsum plasterboard using Aquagrip™ 29860 glue. Details of the plasterboard and lamina are set out in Table 1:

**Table** 1

| Example | Plasterboard | Lamina |
|---------|--------------|--------|
| Example 1 | 15 mm thick Duraline™ | 1.8 mm thick FCG180 fibreglass sheet from Crane Composites |
| Example 2 | 15 mm thick Duraline™ | 2 mm thick PVC sheet |
| Example 3 | 15 mm thick Duraline™ | 2 mm thick HDPE sheet |
| Example 4 | 15 mm thick Duraline™ | 2 mm thick polypropylene sheet |
| Example 5 | 12.9 mm thick Fireline™ | 1.8 mm thick FCG180 fibreglass sheet from Crane Composites |

**Acoustic testing**

Acoustic testing was carried out according to BS EN ISO140-3:1995.
A test specimen was constructed in an aperture having an overall opening 2400 mm high by 3600 mm wide, to provide a partition wall between a source room and a receiving room.
The test specimen was prepared by constructing a framework comprising floor and ceiling channels fixed to the base and head of the test aperture respectively, and studs extending between the floor and ceiling channels at each end of the aperture and at intervals therebetween. The framework was clad on each side with a single layer of the panel being tested, the panel being oriented such that the lamina faced into the interior of the test specimen.
A loudspeaker was positioned in the source room, and a rotating microphone boom in the receiving room measured the average sound pressure level transmitted through the test specimen.
Test curves were obtained for sound absorption for frequencies from 50 Hz to 5000 Hz.

**Calculations**

From sound attenuation tests carried out on unclad Duraline and Fireline boards, theoretical sound attenuation curves were calculated for each of Examples 1-5. These were based on the sound attenuation that would be expected from a board whose mass is increased by an amount corresponding to the mass of the respective lamina. The following formula was used to calculate the expected sound attenuation:

$$\text{Expected } SA_{B+L} = \text{Measured } SA_B + 25 * \log_{10} [(m_B + m_L)/(m_B)]$$

wherein:

Expected $SA_{B+L}$ = expected sound attenuation for board + lamina [dB]
Measured $SA_B$ = measured sound attenuation for board alone [dB]
$m_B$ = mass of board
$m_L$ = mass of lamina
The coefficient of 25 has been derived empirically for single layer, double leaf constructions.

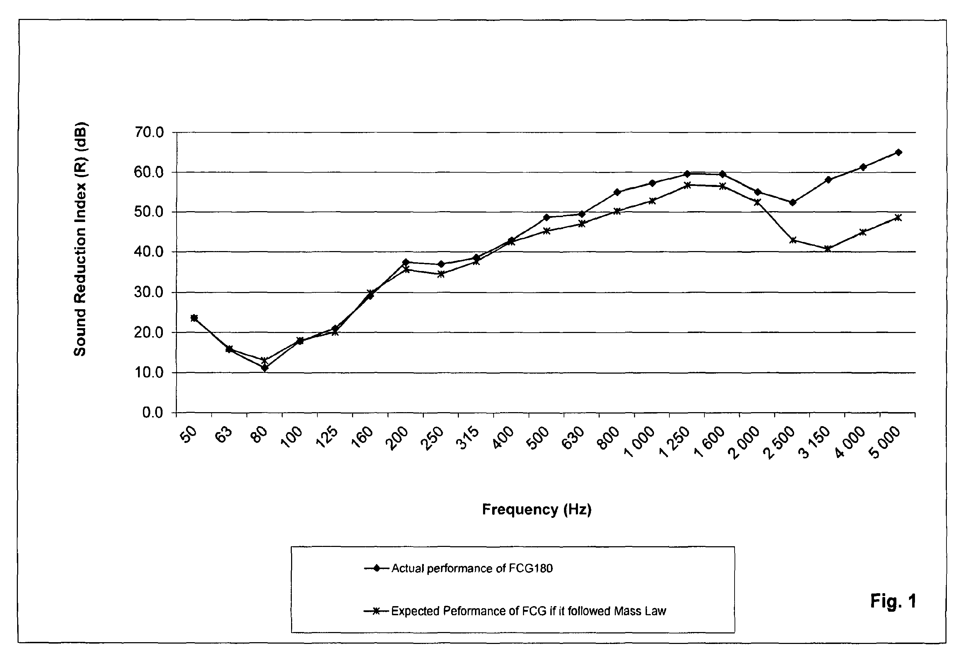

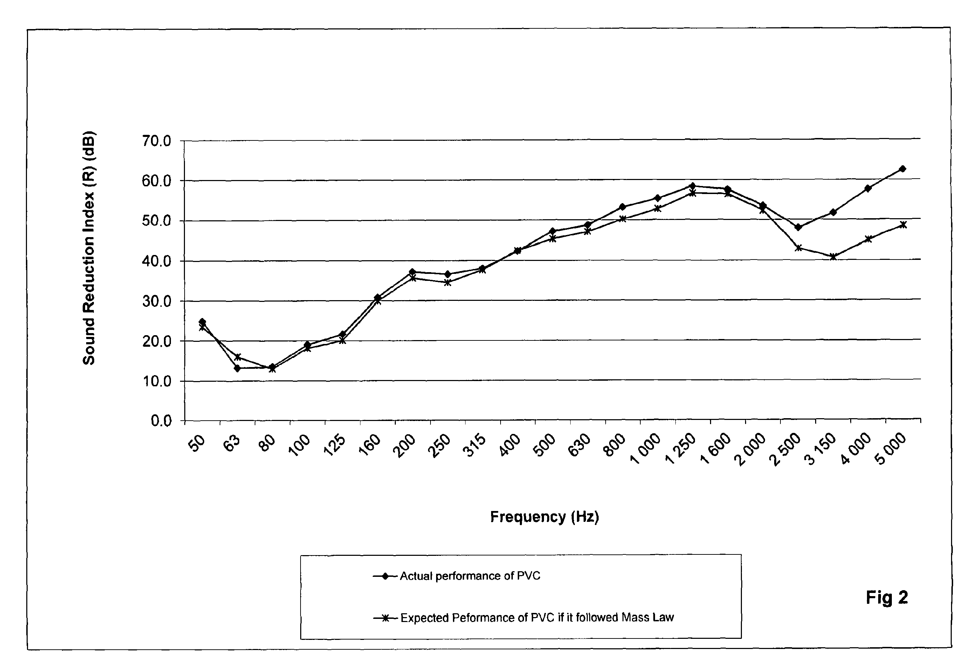

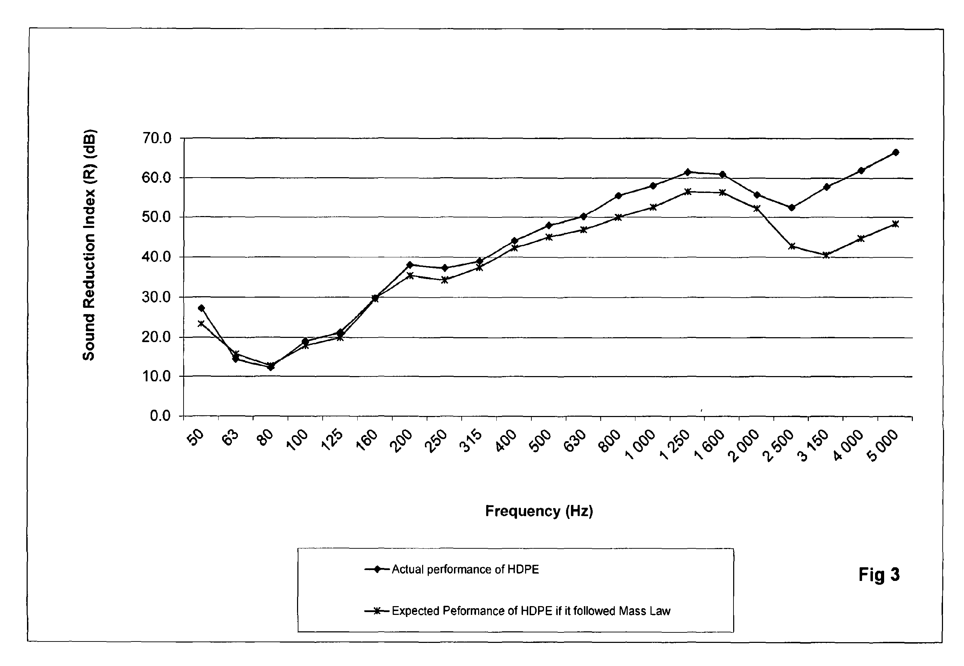

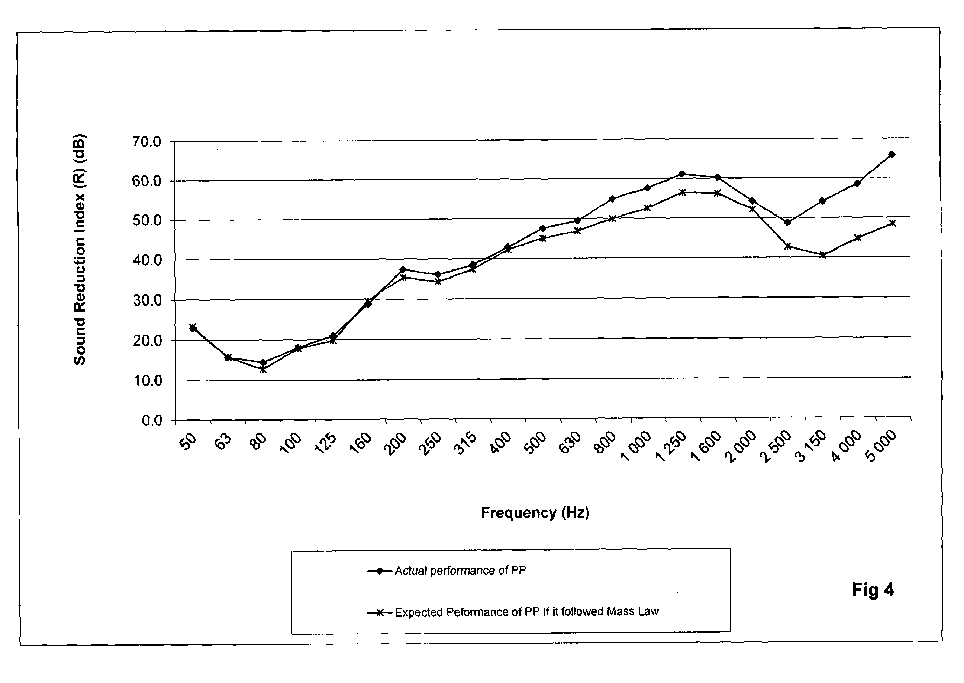

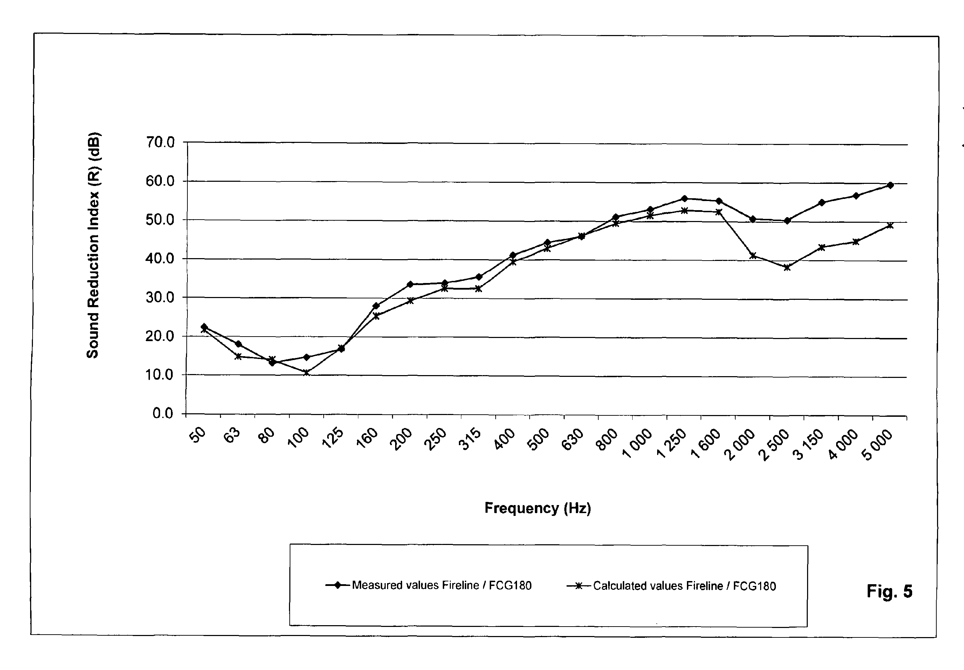

Figures 1-5 show curves for measured and calculated sound attenuation for Examples 1-5. The actual measurements are typically greater than the calculated values at equivalent frequency, particularly at frequencies greater than about 2000 Hz.

## Claims

1.  A panel for use in building construction, the panel comprising a substrate board having two opposed faces, a polymer-based lamina being provided on one of the faces of the substrate board,
    wherein the sound reduction index of a partition wall formed from two of the panels, when measured at a frequency of 5000 Hz, is at least 5 dB greater than that of a partition wall formed from two notional panels having an equivalent mass per unit area to the claimed panel, the notional panels each comprising solely the material of the substrate board.

2.  A panel according to claim 1, wherein the polymer-based lamina is either a monolithic polymer or a composite having a polymer matrix.

3.  A panel according to claim 2, wherein the polymer-based lamina is provided by a fibre-reinforced polymer.

4.  A panel according to any one of the preceding claims, wherein the polymer-based lamina is provided by thermoplastic polymer.

5.  A panel according to any one of the preceding claims, wherein the substrate board is gypsum plasterboard.

6.  A panel according to any one of the preceding claims, wherein the polymer-based lamina is glued to the substrate board.

7.  A panel according to any one of the preceding claims, wherein the thickness of the polymer-based lamina is less than 20% of the thickness of the substrate board.

8.  A panel according to any one of the preceding claims, wherein the thickness of the polymer-based lamina is less than 5mm.

9.  A panel according to claim 1, wherein the polymer-based lamina is selected from the group comprising: polyvinylchloride, HDPE, fibreglass, and polypropylene.

10. A panel according to any one of the preceding claims, wherein the density of the polymer-based lamina is in the range 700-1500 kg/m$^3$.

11. A panel according to any one of the preceding claims, wherein the Modulus of Elasticity of the polymer-based lamina at least 500 MPa.

Fig. 1

EP 2 743 419 A1

Fig 2

EP 2 743 419 A1

Fig 3

**Fig 4**

Sound Reduction Index (R) (dB)

70.0, 60.0, 50.0, 40.0, 30.0, 20.0, 10.0, 0.0

Frequency (Hz)

50, 63, 80, 100, 125, 160, 200, 250, 315, 400, 500, 630, 800, 1 000, 1 250, 1 600, 2 000, 2 500, 3 150, 4 000, 5 000

Actual performance of PP

Expected Peformance of PP if it followed Mass Law

Fig. 5

Europäisches
Patentamt

European
Patent Office

Office européen
des brevets

# EUROPEAN SEARCH REPORT

Application Number

EP 12 29 0435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 489 825 A (PROCTOR & CO A) 26 October 1977 (1977-10-26) * page 1, line 37 - page 2, line 22; figure 1 * | 1,2,4,5 | INV. E04B1/86 E04C2/04 E04C2/26 |
| X | EP 1 251 215 A2 (G P GYPSUM CORP [US]) 23 October 2002 (2002-10-23) * paragraph [0023] - paragraph [0066]; figures 1-3 * | 1-3,5, 7-11 | |
| X | US 3 350 257 A (HOURIGAN DANIEL P ET AL) 31 October 1967 (1967-10-31) * column 1, line 66 - column 2, line 64; figure 1 * | 1,2,4-11 | |

TECHNICAL FIELDS
SEARCHED       (IPC)

E04B
E04C

The present search report has been drawn up for all claims

| Place of search | Date of completion of the search | Examiner |
|---|---|---|
| The Hague | 14 June 2013 | Couprie, Brice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 29 0435

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2013

| Patent document cited in search report | | Publication date | Patent family member(s) | | Publication date |
|---|---|---|---|---|---|
| GB 1489825 | A | 26-10-1977 | NONE | | |
| EP 1251215 | A2 | 23-10-2002 | AU | 784267 B2 | 02-03-2006 |
| | | | AU | 2766202 A | 24-10-2002 |
| | | | CA | 2377518 A1 | 19-10-2002 |
| | | | EP | 1251215 A2 | 23-10-2002 |
| | | | JP | 4323754 B2 | 02-09-2009 |
| | | | JP | 2003025502 A | 29-01-2003 |
| | | | MX | PA02003852 A | 14-07-2003 |
| | | | US | 2002155282 A1 | 24-10-2002 |
| | | | US | 2003203191 A1 | 30-10-2003 |
| US 3350257 | A | 31-10-1967 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008124672 A